# EUROPEAN PATENT SPECIFICATION

(11) **EP 0 335 883 B1**
(45) Date of publication and mention of the grant of the patent: **08.06.1994**
(21) Application number: 87907905.1
(22) Date of filing: 18.11.1987
(51) Int. Cl.: F16K 11/14, F16K 31/08, F16K 31/66

(54) **FUEL CONTROL VALVE CONSTRUCTION**
VENTILAUFBAU FÜR BRENNSTOFFREGELUNG
STRUCTURE DE VANNE DE DISTRIBUTION DE COMBUSTIBLE

(30) Priority: 05.12.1986 US 938621
(43) Date of publication of application: 11.10.1989
(60) Divisional application: 92108813.4
(73) Proprietor: ROBERTSHAW CONTROLS COMPANY, Richmond Virginia 23261-6544 (US)
(72) Inventor: KELLY, Samuel, T., Torrance, CA 90505 (US); KATCHKA, Jay, R., Cypress, CA 90630 (US)
(74) Representative: Niedmers, Ole, Dipl.-Phys.
(86) International application number: PCT/US87/03008
(87) International publication number: WO 88/04381

(56) References cited:
- FR-A- 1 519 739
- US-A- 2 363 073
- US-A- 2 635 632
- US-A- 2 703 095
- US-A- 2 945 502
- US-A- 3 763 875
- US-A- 3 800 393

## Description

This invention relates to a fuel control valve construction comprising a housing means having an inlet means that is adapted to be interconnected to fuel source and a main outlet means that is adapted to be interconnected to a main burner means, said housing means having a main valve seat for interconnecting said inlet means with said main outlet means, a movable main valve member for opening and closing said main valve seat, and a movable lever operatively associated with said main valve member and having a manually operable actuator means for controlling the operating positions of said lever, said lever having an intermediate cam follower portion and opposed ends disposed on each side of said cam follower portion, with one end of said opposed ends being pivotally mounted to said housing means and with the other end of said opposed ends serving for operating said main valve member, said housing means having biasing means operatively interconnected to said lever to tend to pivot said lever in one direction that opens said main valve member away from its said main valve seat, said actuator means having a cam means operatively associated with said cam follower portion of said lever to tend to control the pivoted position of said lever under the force of said biasing means, said actuator means having an "off" position thereof that causes said cam means to hold said lever in an "off" pivoted position thereof that maintains said main valve member in its closed condition against its said valve seat, said actuator means having an "on" position thereof that causes said cam means to tend to hold said lever in an "on pivoted position thereof that maintains said main valve member in its open condition away from its said valve seat, and a thermostatically controlled means.

A fuel control valve construction of this kind is known in the art (US-A-3 767 875). In this prior art document a gas control system is described with which a valve stem shall perform a poorly axial motion. This is achieved in that pivoting handle with at least one cam is provided for actuating the valve and to cooperate with a control cam of a thrust member which is slidably guided actually in the gas control system housing.

It is also known to provide a fuel control valve construction comprising a housing means having an inlet means that is adapted to be interconnected to a fuel source, and a rain outlet means that is adapted to be interconnected to a main burner means, the housing means having a pilot outlet means that is adapted to be interconnected to a pilot burner means for the main burner means, the housing means having a pilot valve seat and a main valve seat for interconnecting the inlet means respectively with the pilot outlet means and the main outlet means, the housing means having a movable pilot valve member for opening and closing the pilot valve seat, and a movable main valve member for opening and closing the main valve seat. For example, see the US-A-4 549 571. It is also known to provide a combination comprising a supporting means, electrically operated coil means carried by the supporting means, and two movable plunger means carried by the supporting means and operatively associated with the coil means to be moved to certain positions thereof when the coil means is energized. For example, see the aforementioned patent US-A-4 549 571.

Finally it is also known to provide a fuel control valve construction comprising a housing means having an inlet means that is adapted to be interconnected to a fuel source, and a main outlet means that is adapted to be interconnected to a main burner means, the housing means having a pilot outlet means that is adapted to be interconnected to a pilot burner means for the main burner means, the housing means having a pilot valve seat and a main valve seat for interconnecting the inlet means respectively with the pilot outlet means and the main outlet means, the housing means having a movable pilot valve member for opening and closing the pilot valve seat, and a movable main valve member for opening and closing the main valve seat, the housing means having a manually operable actuator means for controlling the operating positions of the valve members, the actuator means having an "off" position wherein both of the valve members are in a closed condition thereof, and an "on" position wherein both of the valve members are in an open condition thereof, the actuator means having a " pilot" position wherein the pilot valve member is in an open condition thereof and the main valve member is in a closed condition thereof.

It is the object of this invention to develop further the fuel control valve construction known in the art.

According to the invention this is achieved in that the thermostatically controlled means is operatively associated with said lever and is adapted to engage and hold said lever in a position wherein said main valve member is closed condition against its main valve seat when said thermostatically controlled means is in one perating condition thereof and said actuator means is in said "on" condition thereof.

In particular, it was found according to the teachings of this invention that the pilot valve member and the main valve member can be carried by a the single lever that in turn is movable carried by the fuel control valve housing means, and that an actuator means can be carried by the housing means for controlling the operating positions of that lever.

In particular, it was found according to the teachings of this invention that a single electrically operated coil can have a portion of one of the plunger means disponsed therein while another plunger means is arranged to be entirely external so that coil while being adapted to be operated by the coil substantiallly in unison with the plunger means that has the portion thereof disposed in that coil.

For example, one embodiment of this invention provides a combination comprising a supporting means, electrically operated coil means carried by the supporting means, and two movable plunger means carried by the supporting means and operatively associated with the coil means to be moved to certain positions thereof when the coilmeans is energized, the coil means comprising a single coil having a portion of one of the plunger means disposed therein, the other of the plunger means being entirely external to the coil while being adapted to be operated by the coil substantially in unison with the one plunger means.

In particular, it was found according to the teachings of this invention that the actuator means for the fuel control valve construction can comprise an arm that is pivotally mounted to the housing means and is generally movable in a straight line manner while operating the pilot valve member and the main valve member.

The features of the invention, and its technical advantages, can be seen from the following description of preferred embodiments, together with the claims and the accompanying drawings, in which:
Fig. 1 is a top perspective view of the new fuel control valve construction of this invention.
Fig. 2 is an enlarged fragmentary top view of a portion of the fuel control valve construction of Fig. 1 with the electrical housing thereon removed.
Fig. 3 is an enlarged cross-sectional view taken on line 3-3 of Fig. 1.
Fig. 4 is a partial cross-sectional view taken on line 4-4 of Fig. 3.
Fig. 5 is a fragmentary cross-sectional view taken on line 5-5 of Fig. 2 and illustrates the coil means and plunger means operated thereby.
FIG. 6 is a fragmentary exploded perspective view of certain of the parts illustrated in FIG. 5.
FIG. 7 is an enlarged exploded perspective view of a pivotally mounted lever means of the fuel control valve construction of this invention.
FIG. 8 is an exploded perspective view of part of the actuator means of the fuel control valve construction of this invention.
FIG. 9 is an enlarged fragmentary view, partially in cross section, illustrating one step in the method of assembling together the parts of FIG. 8.
FIG. 10 is a view similar to FIG. 9 and illustrates the final step in the method of assembling together the parts of FIG. 8.
FIG. 11 is an enlarged fragmentary end view of the fuel control valve construction of FIG. 1 and illustrates the actuating arm thereof.
FIG. 12 is a fragmentary view of the actuator arm arrangement and is taken in the direction of the arrows 12-12 of FIG. 11.
FIG. 13 is a schematic view in cross section of the fuel control valve construction of this invention and illustrates the same with the actuator means being disposed in the "off" position thereof.
FIG. 14 is a view similar to FIG. 13 and illustrates the actuator means in the "set" or "pilot light" position thereof.
FIG. 15 is a view similar to FIG. 13 and illustrates the actuator means in the "pilot" position thereof.
FIG. 16 is a view similar to FIG. 13 and illustrates the actuator means in the "on" position thereof while the thermostatic means is in the "off" condition thereof.
FIG. 17 is a view similar to FIG. 13 and illustrates the actuator means in the "on" position thereof and the thermostatic means in the "on" condition thereof.
FIG. 18 is a view similar to FIG. 13 and illustrates the actuator means in the "on" position thereof and the flame-sense means in the "off" condition thereof.
FIG. 19 is a fragmentary schematic view similar to FIG. 13 and illustrates another embodiment of this invention.

### Best Modes for Carrying Out the Invention

While the various features of this invention are hereinafter illustrated and described as being particularly adapted to provide a valve construction for controlling a flow of gaseous fuel, such as natural gas, to a main burner means of a heating apparatus, such as a furnace, water heater, etc., it is to be understood that the various features of this invention can be utilized singly or in various combinations thereof to provide a fuel control valve construction for other apparatus and/or other fuels as desired.

Therefore, this invention is not to be limited to only the embodiments illustrated in the drawings, because the drawings are merely utilized to illustrate one of the wide variety of uses of this invention.

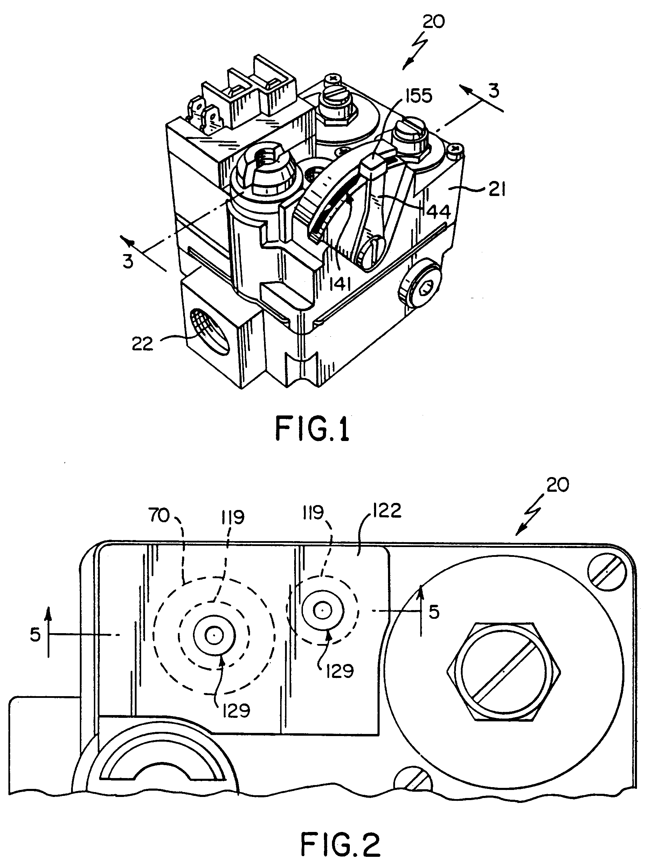

Referring now to FIGS. 1-4, the new fuel control valve construction of this invention is generally indicated by the reference numeral 20 and comprises a housing means 21 that is formed from a plurality of parts of any suitable material, such as metallic material. The housing means 21 has an inlet means 22 that is adapted to be interconnected to a source of fuel 23, and also has an outlet means 24 that is adapted to be interconnected to a main burner means 25, such as a burner means of a furnace or the like (not shown) when the fuel source 23 is a gaseous fuel source or the like.

The housing means 21 has a first main valve seat 26 disposed between the inlet 22 and outlet 24, and a second main valve seat 27 disposed between the first main valve seat 26 and the outlet 24, whereby both main valve seats 26 and 27 must be in an open condition before fuel can flow from the inlet 22 to the outlet 24 and, thus, from the source 23 to the main burner means 25.

A first movable main valve member 28 is carried by the housing means 21, in a manner hereinafter set forth, to open and close the first main valve seat 26, and a second movable main valve member 29 is movably carried by the housing means 21 to open and close the second main valve seat 27 in a manner hereinafter set forth.

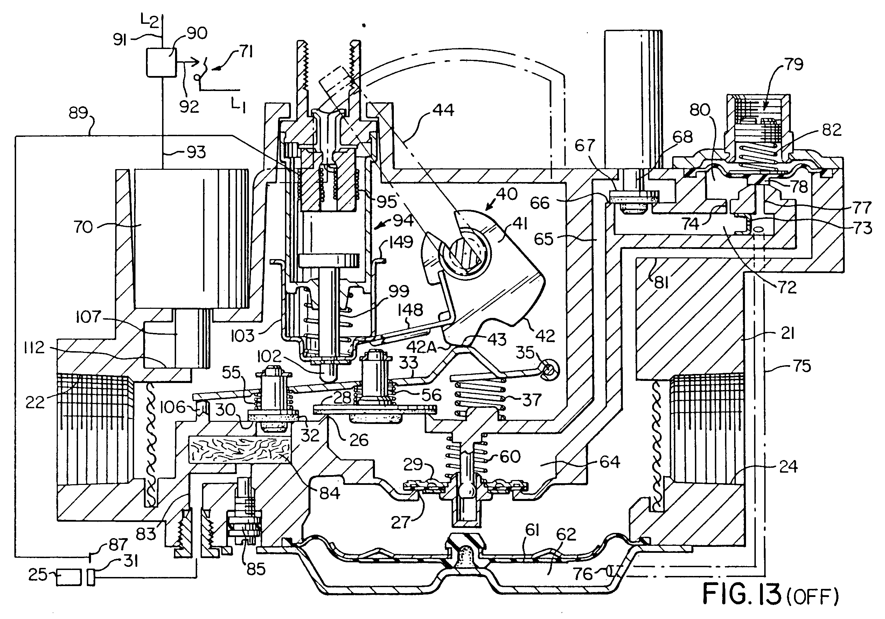

The housing means 21 has a pilot valve seat 30 that is disposed in parallel to the first main valve seat 26 and that is adapted to interconnect the inlet 22 to a pilot burner means 31, FIG. 13, when the pilot valve seat 30 is in an open condition in a manner hereinafter set forth. The pilot burner 31 is disposed adjacent the main burner 25 to ignite the main burner 25 when the pilot burner 31 has flame means in a manner hereinafter set forth.

A pilot valve member 32 is carried by the housing means 21 in a manner hereinafter set forth and is adapted to open and close the pilot valve seat 30.

The pilot valve member 32 and the first main valve member 28 are carried by a lever 33 that has one end 34 pivotally mounted to the housing means 21 by a pivot pin 35, whereby the other end 36 of the lever 33 is adapted to be moved in an arcuate manner as hereinafter set forth to control the operating positions of the pilot valve member 32 and the first main valve member 28. A compression spring 37 has one end 38 bearing against the housing means 21 and the other end 39 bearing against the lever 33 to tend to pivot the lever 33 in a direction that would open the valve members 32 and 28 relative to their respective valve seats 30 and 26.

The housing means 21 carries an actuator means that is generally indicated by the reference numeral 40 and comprises a cam member 41 that has a cam surface 42 for acting on a cam follower 43 of the lever 33 in a manner hereinafter set forth to control the position of the lever 33 and, thus, the positions of the pilot valve member 32 and main valve member 28 as will be apparent hereinafter and depending upon the position of an actuator arm 44 of the actuator means 40. The arm 44 has one end 45 thereof secured to a shaft means 46 that is journaled in a suitable bearing means 47 of the housing means 21 and that has its end 48 fixed to the cam member 41 so as to rotate the cam member 41 depending upon the pivoted position of the arm 44, as will be apparent hereinafter.

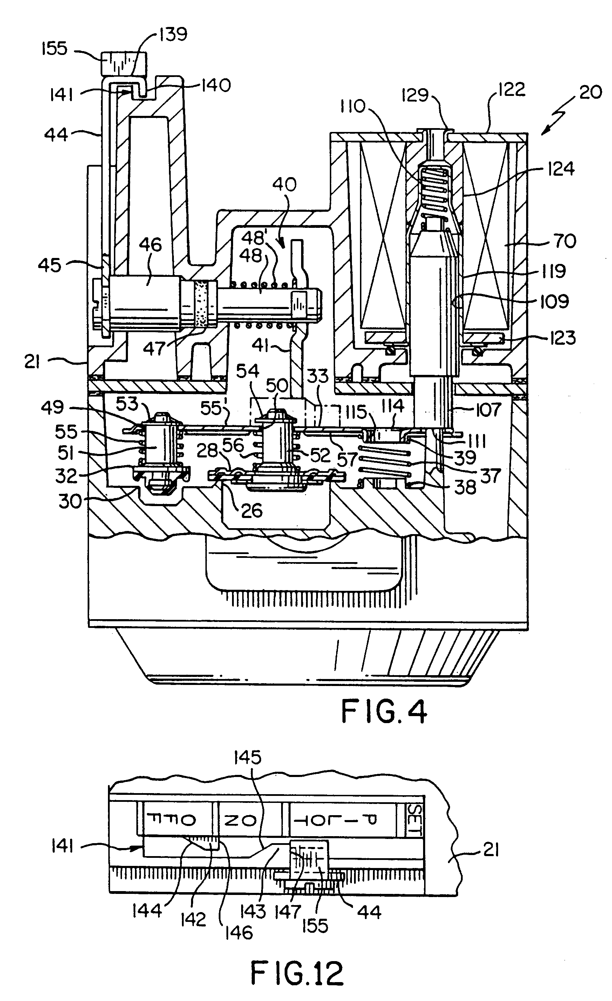

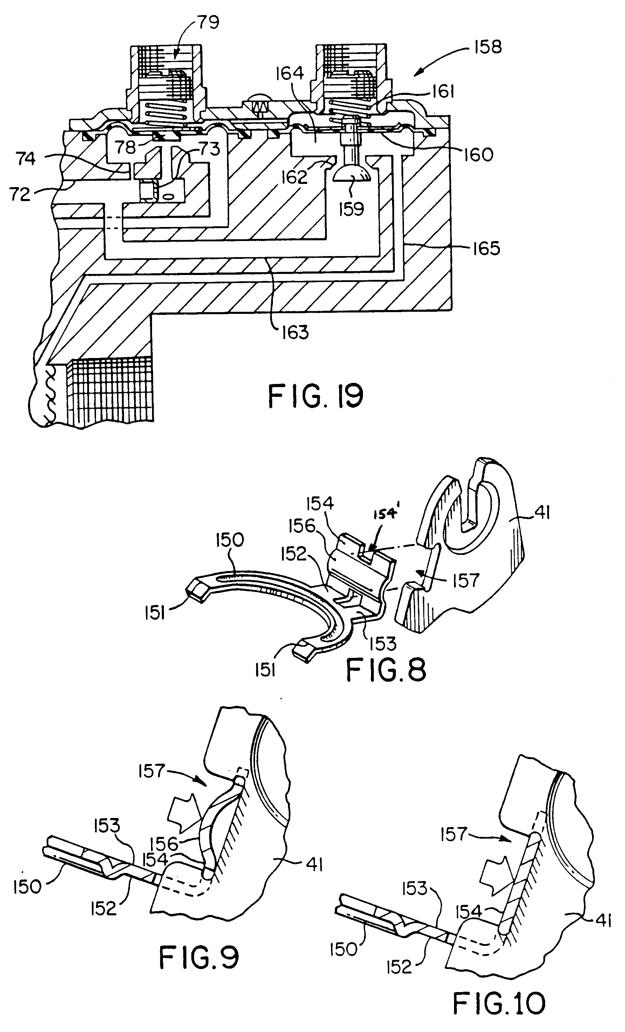

As illustrated in FIGS. 4 and 7, the end 36 of the lever 33 has a pair of openings 49 and 50 passing therethrough and respectively receiving cylindrical stems 51 and 52 of the pilot valve member 32 and first main valve member 28 therethrough. The stems 51 and 52 respectively have end retainers 53 and 54 which are larger than the openings 49 and 50 and are disposed on the side 55' of the lever 33 so as to prevent the stems 51 and 52 from being pulled out of the openings 49 and 50. The stems 51 and 52 telescopically carry compression springs 55 and 56 which respectively bear against the other side 57 of the lever 33 and the respective valve members 32 and 28 so as to tend to urge the valve members 32 and 28 away from the side 57 of the lever 33.

In this manner, the valve members 32 and 28 are axially movable relative to the lever 33 for a purpose hereinafter set forth.

The second main valve member 29 has a closed end opening 58 interrupting the side 29' thereof and receiving a stem 59 therein. The stem 59 is fixed to the housing means 21, whereby the stem 59 guides the opening and closing movement of the second main valve member 29. A compression spring 60 is telescopically disposed on the stem 59 and bears against the housing means 21 and the valve member 29 in such a manner that the force of the compression spring 60 tends to move the valve member 29 against the valve seat 27.

The opening and closing movement of the valve member 29 is controlled by a flexible diaphragm 61 that cooperates with the housing means 21 to define a chamber 62 that is adapted to be pressurized in a manner to have a central abutment 63 of the diaphragm 61 abut against the valve member 29 and move the same to an open condition in opposition to the force of the compression spring 60 in a manner fully set forth in the aforementioned US-A-4,549,571, whereby this patent is being incorporated into this disclosure by this reference thereto.

Therefore, only sufficient details of the structure and operation of the diaphragm 61 for opening and closing the second main valve member 29 that is deemed necessary to understand the operation of the valve construction 20 of this invention will now be set forth, as the complete details of the structure and operation can be obtained from the aforementioned US-A-4,549,571.

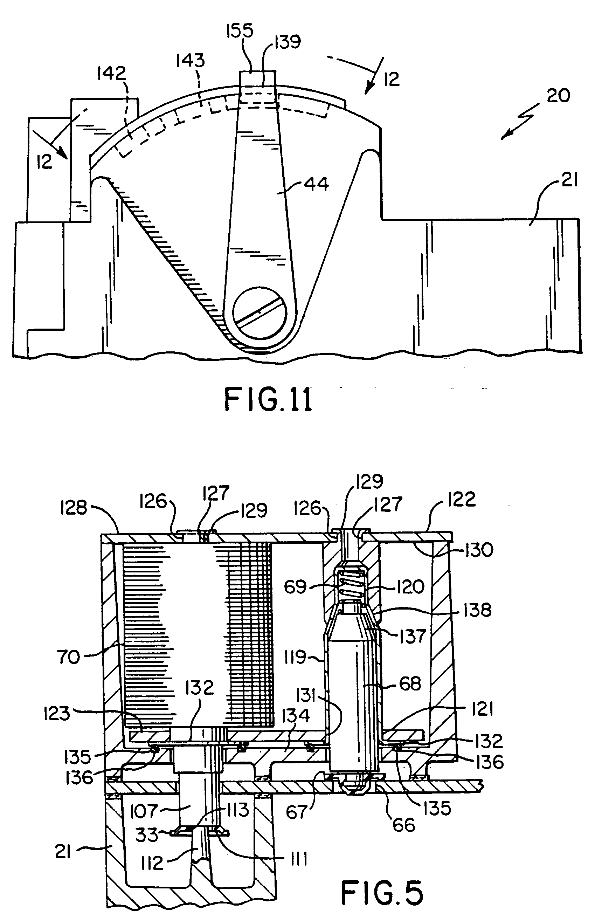

As illustrated in FIG. 13, a chamber area 64 is disposed in the housing means 21 between the valve seats 26 and 27 and is interconnected by a passage 65 of the housing means 21 to a valve seat 66 thereof that is opened and closed by a valve member 67 that is carried on a plunger means 68 that is normally biased to a position to close the valve member 67 against the valve seat 66 by a compression spring 69, FIG. 5, in a manner hereinafter described.

However, when an electrical coil 70, FIG. 5, is energized by the closing of a thermostat 71, FIG. 13, in a manner hereinafter set forth, the plunger 68 is uniquely moved in opposition to the force of the compression spring 69 to open the valve member 67 away from the valve seat 66 and thereby interconnect the passage 65 to a housing passage 72 that leads to two orifices or restrictions 73 and 74.

The restriction 73 interconnects the passage 72 to a passage 75 of the housing means 21 that has one end 76 interconnected to the chamber 62 of the movable diaphragm 61, and has the other end 77 thereof defining a bleed valve seat that is open and closed by a flexible diaphragm 78 of a pressure regulator that is generally indicated by the reference numeral 79.

The flexible diaphragm 78 of the pressure regulator 79 defines a chamber 80 with the housing means 21 that is interconnected by a passage 81 to the outlet 24 of the housing means 21, the restriction 74 interconnecting the passage 72 to the chamber 80 for a purpose hereinafter described.

Therefore, it can be seen that when the first main valve member 28 is disposed in an open condition and the valve member 67 is disposed in an open condition, fluid pressure from the inlet 22 is adapted to flow through the restriction 73 and into the passage 75 to pressurize the chamber 62 and thereby move the diaphragm 61 upwardly to engage against the valve member 29 and move the same to an open condition thereof, with the pressure regulator means 79 controlling the amount of bleed from the chamber 62 out through the valve seat 77 depending upon the position of the flexible diaphragm 78 under the force of a compression spring 82 of the pressure regulator 79 in the manner fully set forth in the aforementioned US-A-4,549,571.

When the valve member 67 closes against the valve seat 66, fluid pressure from the diaphragm chamber 62 is adapted to bleed out of the passage 75 through the bleed valve seat 77 until the compression spring 82 closes the diaphragm 78 against the seat 77, whereby further bleeding of the pressure from the chamber 62 takes place by the pressure flowing through the orifice 73 and then through the orifice 74 into the chamber 80, and, thus, to the outlet 24 through the passage 81, so that the valve member 29 can fully close against the valve seat 27 under the force of the compression spring 60 to terminate flow of fuel through the valve seat 27 to the outlet 24.

As illustrated in FIG. 13, the pilot valve seat 30 leads to the pilot burner 31 through a passage means 83 in the housing means 21 that includes a filter means 84 and an adjusting key 85, so that when the pilot valve member 32 is moved to an open condition thereof, fuel from the inlet 22 is adapted to flow through the filter 84 and adjusting key 85 to the pilot burner 31 to issue therefrom and be ignited by a match or the like in a manner hereinafter set forth.

An electrical circuit means 90 is adapted to be interconnected to a power source lead L2 by a lead 91, and to another power source lead L1 by a lead 92. However, the lead 92 is only interconnected to the power source lead L1 when the thermostat 71 closes against the lead 92 when the thermostat 71 senses that the output temperature effect of the main burner means 25 has fallen below the selected temperature of the thermostat 71, as is well known in the art.

The electrical means 90 is interconnected to the coil 70 by a lead means 93 so that electrical energy passes through the coil 70 as long as the thermostat 71 is in a closed condition thereof, as will be apparent hereinafter.

A flame-sensing means 87, such as a thermocouple, is provided for sensing the flame means at the pilot burner means 31. In particular, in order to make sure that gas from the inlet 22 of the valve construction 20 is not directed to the main burner means 25 unless flames are present at the pilot burner means 31, and electromagnetically operated flame-sense means is carried by the housing means 21 and is generally indicated by the reference numeral 94. The flame-sense means 94 comprises a coil means 95 that has current flowing through the same when the flame detector means 87 is detecting that a flame exists at the pilot burner means 31 in a manner conventional in the art. The flame-sensing means 87 is interconnected to the coil 95 by the lead means 89.

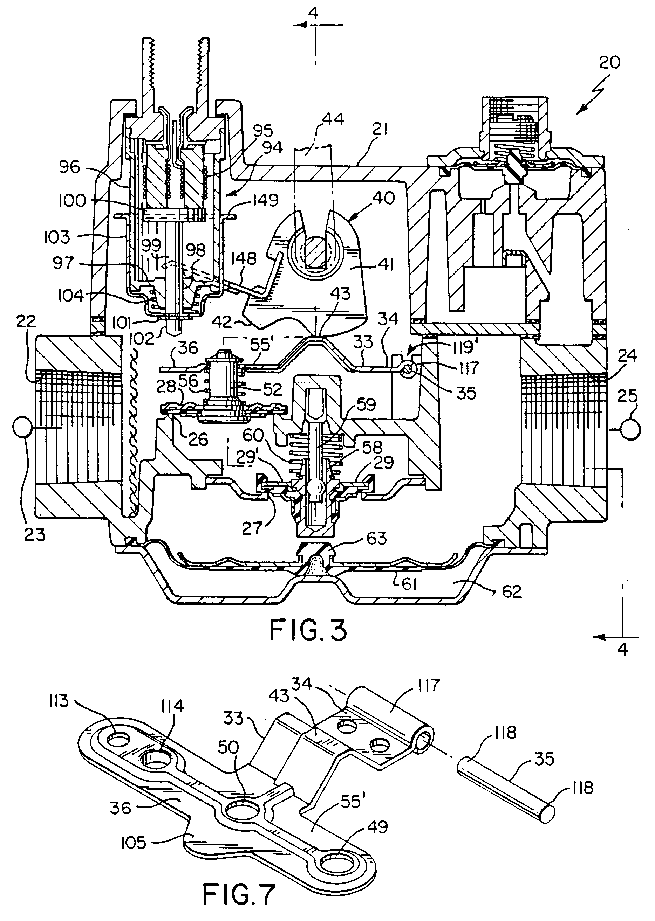

The flame-sense means 94, as illustrated in FIG. 3, has a fixed housing 96 that surrounds the coil 95 and is provided with a closed end 97 that has an opening 98 passing therethrough and through which a plunger 99 extends. The plunger 99 has an enlarged end 100 that is adapted to be magnetically locked in the position illustrated in FIG. 3 when the plunger 99 is disposed in the locked position of FIG. 3 and the coil 95 is being activated by the detector 87 detecting a flame at the pilot burner means 31.

The plunger 99 of the flame-sense means 94 has a retainer 101 on the end 102 thereof and thereby secures a sleeve 103 to the plunger means 99, with the sleeve 103 telescoping the cylindrical housing 96 while being axially movable relative thereto. A compression spring 104 is disposed so as to bear against the closed end 97 of the housing 96 and against the sleeve 103 so as to tend to move the plunger means 99 downwardly relative to the coil means 95. Thus the sleeve 103 is fixed to the end 102 of the plunger means 99 so as to move in unison therewith as will be apparent hereinafter.

The end 102 of the plunger means 99 of the flame-sense means 94 is adapted to engage against the end 36 of the lever 33 at its extended tip 105, FIG. 7, and move the lever 33 so that the end 36 thereof abuts against a stop 106 of the housing means in the manner illustrated in FIG. 13, wherein the lever 33 is in such a pivoted position thereof that the pilot valve member 32 and main valve member 28 are respectively urged in closed conditions against their respective valve seats 32 and 26 by the compression springs 55 and 56 as illustrated in FIG. 13.

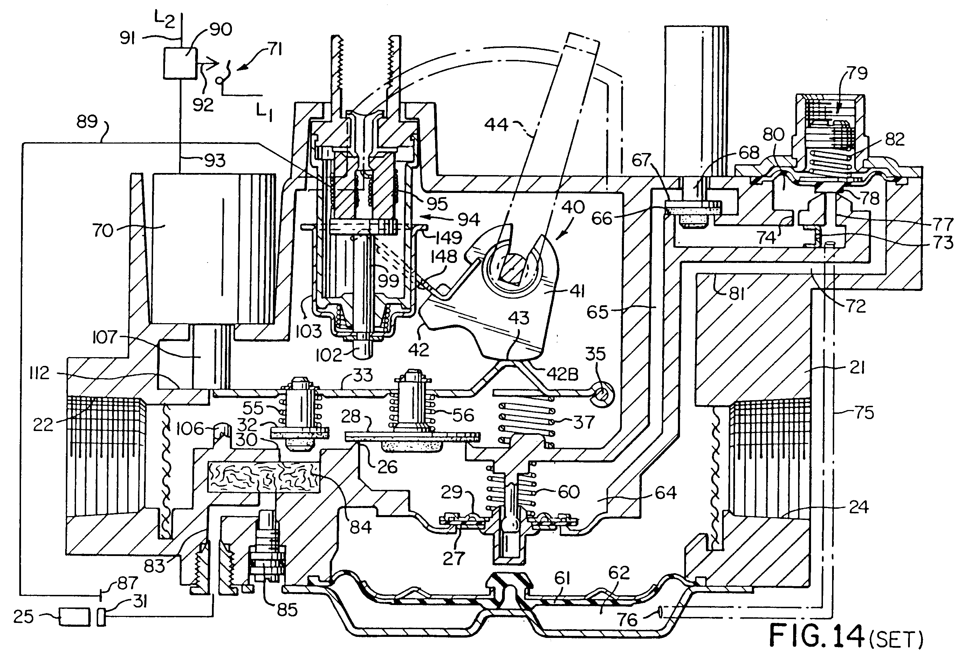

However, when the plunger means 99 of the flame-sense means 94 is locked by the coil means 95 in its locked condition as illustrated in FIGS. 3 and 14, the lever 33 is adapted to be operated by the actuator means 40 and the coil 70 in a manner hereinafter set forth.

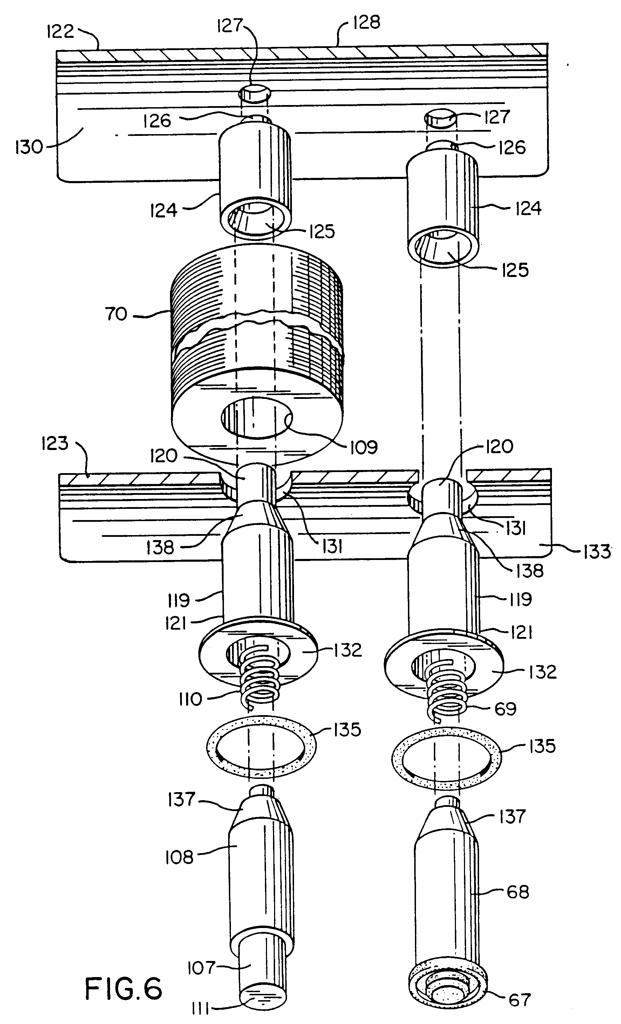

Another movable plunger means 107 is carried by the housing means 21 and has an end portion 108, FIG. 6, disposed within the central opening 109 of the electrical coil 70 so as to be operably movable by the coil 70 when the coil 70 is energized in opposition to the force of a compression spring 110, which is similar to the compression spring 69 for the plunger 68.

The plungers 68 and 107 are both adapted to be substantially simultaneously moved upwardly in FIG. 5 in opposition to the force of the compression springs 110 and 69 when the coil 70 is energized by the thermostat 71 closing against the arm 92. However, when the thermostat 71 is in an open condition so that no electrical current flows through the coil 70, the compression springs 110 and 69 urge the plungers 107 and 68 downwardly to the position illustrated in FIG. 5 wherein the valve member 67 of the plunger 68 is disposed against the valve seat 66 to close the same, and the end surface 111 of the plunger 107 is disposed against a stop 112 of the housing means 21. The plunger 107 is constructed and arranged in such a way that the same is adapted to engage the end 36 of the lever 33 and push the same downwardly therewith so that the stop 112 passes through an opening 113 to be engaged by the end surface 111 of the plunger 107 as illustrated in FIG. 5. The stop 112 is schematically illustrated in FIG. 13 with the plunger 107 disposed against the same, and it can be seen that the stop 112 is in a higher position than the stop 106 against which the lever 33 is disposed when the flame-sense means 94 is in its extended condition as illustrated in FIG. 13, such further movement of the lever 33 below the stop 112 being permitted by the opening 113 of the lever 33.

However, when the flame-sense means 94 has its plunger 99 moved upwardly as illustrated in FIG. 14, the compression spring 37 that acts on the end 36 of the lever 33 causes the lever 33 to move upwardly and engage against the end surface 111 of the plunger 107 as illustrated in FIGS. 4 and 5, such position of the lever 33 permitting the pilot valve member 32 to move away from its pilot valve seat 30 while maintaining the first main valve member 28 against its main valve seat 26, as illustrated in FIG. 14.

The end 36 of the lever 33 is provided with a fourth opening 114 that passes therethrough and defines a downwardly extending annular flange 115 that is received within the end 39 of the compression spring 37 as illustrated in FIG. 4, whereby the annular flange 115 acts as a spring retainer for the compression spring 37.

The end 34 of the lever 33 defines a cylindrical structure 117 through which the pivot pin 35 extends in such a way that the opposed ends 118 of the pin 35 extend beyond the cylindrical structure 117 of the lever 33 and can be received in suitable notches 119' of the housing means 21 so as to hold the pivot pin 35 in place and permit the lever 33 to pivot on the pin 35 to position the lever 33, as will be apparent hereinafter.

Referring now to FIGS. 5 and 6, it can be seen that the single coil 70 that operates the two plunger means 68 and 107 in substantially a simultaneous manner is arranged so that the flux created by the energized coil 70 not only draws the plunger 107 upwardly into the opening 109 thereof in the same manner as an armature, but also such flux created by the energized coil 70 is sufficient to draw the plunger 68 upwardly into an open ended cylindrical member 119 that has a closed end 120 and an open end 121. A similar cylindrical member 119 is provided for the plunger means 107 as will be apparent hereinafter.

A pair of mounting plates 122 and 123 are provided for the housing means 21 and are respectively spaced from each other by the sleeves 119 in cooperation with a pair of pole pieces 124 respectively secured to the plate 122 and having the closed ends 120 of the sleeves 119 disposed in the open ends 125 thereof as illustrated in FIGS. 5 and 6.

The pole pieces 124 have reduced cylindrical portions 126 respectively passing through openings 127 in the plate 122 to be turned over against the side 128 thereof to define rivetlike structures 129 that secure the pole pieces 124 to the plate 122 so that the pole pieces 124 extend from the other side 130 of the plate 122 toward the plate 123.

The sleeves 119 respectively pass through suitable openings 131 in the plate 123 and have outwardly directed annular flanges 132 thereof at the open ends 121 thereof abutting against the underside 133 of the plate 123 when the same have their ends 120 fully received in the pole pieces 124 as illustrated in FIG. 5. The annular flanges 132 of the sleeves 119 are secured to the side 133 of the plate 123 in any suitable manner, such as by brazing, etc.

The plate 123 has its side 133 sealed to a substantially flat surface 134 of the housing means 21 by suitable annular O-ring sealing members 135 that are respectively disposed in annular grooves 136 in the surface 134, as illustrated in FIG. 5.

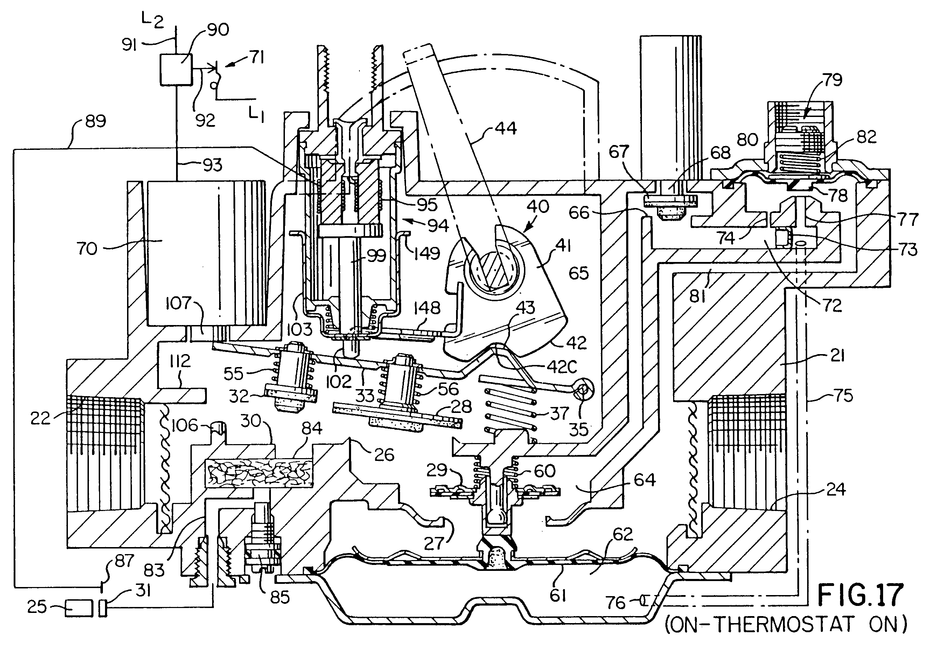

In this manner it can be seen that by forming the plates 122 and 123, pole pieces 124, cylindrical members 119, and plungers 68 and 107 of suitable metallic material, the flowing of an electrical current through the coil 70 in a manner well known in the art will cause the plungers 107 and 68 to each be drawn upwardly in FIG. 5, in opposition to the force of the compression springs 110 and 69, until the frusto-conical ends 137 of the plungers 68 and 107 engage against cooperating frusto-conical sections 138 of the cylindrical members 119 to prevent further upward movement thereof. However, such upward movement of the plunger 68 is sufficient to open the valve member 67 away from the valve seat 66, and such upward movement of the plunger 107 is sufficient to permit the lever 33 to be movable to the fully "on" position of the lever 33, as illustrated in FIG. 17, to cause both the pilot valve member 32 and first main valve member 28 to be disposed completely away from their valve seats 30 and 26 for a purpose hereinafter set forth.

Also, it is believed that the coil 70 and plungers 107 and 68 can be constructed and arranged in such a way that the plunger 107 will be pulled in by the energized coil 70 slightly before the plunger 68 opens the valve member 67 away from the valve seat 66, if desired.

For further details of the general structure and operation of an electrical coil and its associated armature or plunger see US-A-4,142,169, whereby this patent is being incorporated into this disclosure by this reference thereto.

The arm 44 of the actuator means 40 has its upper end 139 bent into a U-shape to define a downwardly depending tang 140 which is received in substantially a straight line slot 141 formed in the housing means 21, whereby the slot 141 guides the pivoting movement of the arm 44. However, as shown in particular in FIG. 12, a pair of abutments 142 and 143 are respectively provided in the slot 141, with the abutments 142 and 143 respectively having tapered surfaces 144 and 145 and flat end surfaces 146 and 147 respectively disposed in the normal path of movement of the tang 140 of the arm 44. The arm 44 is sufficiently resilient so that the same can be pushed to the right in FIG. 4, or pulled to the left in FIG. 4, and the natural resiliency of the arm 44 will return the tang 140 to approximately the center of the slot 141 when the pushing and/or pulling force thereon is removed.

Thus, it can be seen in FIG. 12 that when the tang 140 of the arm 44 is disposed in the "off" position, the tang 140 can be readily pushed directly to the "set" position as the tang 140 will first engage against the slanting surface 144 of the abutment 142 and thereby be pushed downwardly in FIG. 12 to clear the abutment 142 and then will engage against the slanting surface 145 of the abutment 143 so as to be pushed upwardly in FIG. 12 to clear the abutment 143, whereby the tang 140 will be received in the "pilot" area as illustrated in full lines in FIG. 12 and can be directly pushed to the right to the "set" position for pilot lighting purposes, as will be apparent hereinafter.

However, a coiled torsion spring 48' is telescopically disposed on the end 48 of the shaft means 46 and has one end interconnected to the housing means 21 and the other end interconnected to the shaft means 46 in such a way that such spring 48' is wound up when the arm 44 is moved from the "pilot" position thereof to the "set" position thereof. In this manner, the spring 48' will return the arm 44 from the "set" position thereof against the stop surface 147 of the stop 143 at the "pilot" position thereof with sufficient force when the operator releases the arm 44 after the same was being held in the "set" position thereof for pilot lighting purposes, as will be apparent hereinafter.

In order to return the arm 44 from the "pilot" position to the "on" position, the operator must push upwardly on the arm 44 from the position illustrated in FIG. 12 in order to have the tang 140 clear the stop abutment surface 147 and thereby permit the tang 140 to be moved from the "pilot" position to the "on" position. However, with the arm 44 pushed upwardly in FIG. 12, it will be seen that the tang 140 will engage against the abutment surface 146 of the abutment 142 and cannot then be pushed directly to the "off" position as the arm 44 must now be pulled downwardly in FIG. 12 in order to have the tang 140 clear the surface 146 to be then pushed into an "off" position.

Therefore, the operator will directly move the arm 44 from the "off" position to the "set" position without realizing the effect of the abutments 142 and 143. However, in order to return the arm 44 from the "pilot" position to the "off" position, the operator must first push upwardly on the arm in FIG. 12 to get to the "on" position, and must then pull downwardly on the arm 44 in order to move the arm 44 from the "on" position to the "off" position.

Of course, the above described substantially straight line pivoting movement of the arm 44 to the various positions illustrated in FIG. 12 causes the cam member 41 to assume the various positions illustrated in FIGS. 13, 14, 15, and 16.

When the arm 44 is being moved from the "off" position of FIG. 13 to the "set" position of FIg. 14, it can be seen that a yoke member 148 that is carried by the cam member 41 engages against an outwardly directed annular flange 149 on the cylindrical sleeve 103 of the flame-sense means 94 and moves the same upwardly from the position illustrated in FIG. 13 to the position illustrated in FIG. 14, in opposition to the force of the compression spring 104, so as to dispose the enlarged end 100 of the plunger 99 in its locked position adjacent the coil 95 of the flame-sense means 94 for a purpose hereinafter described.

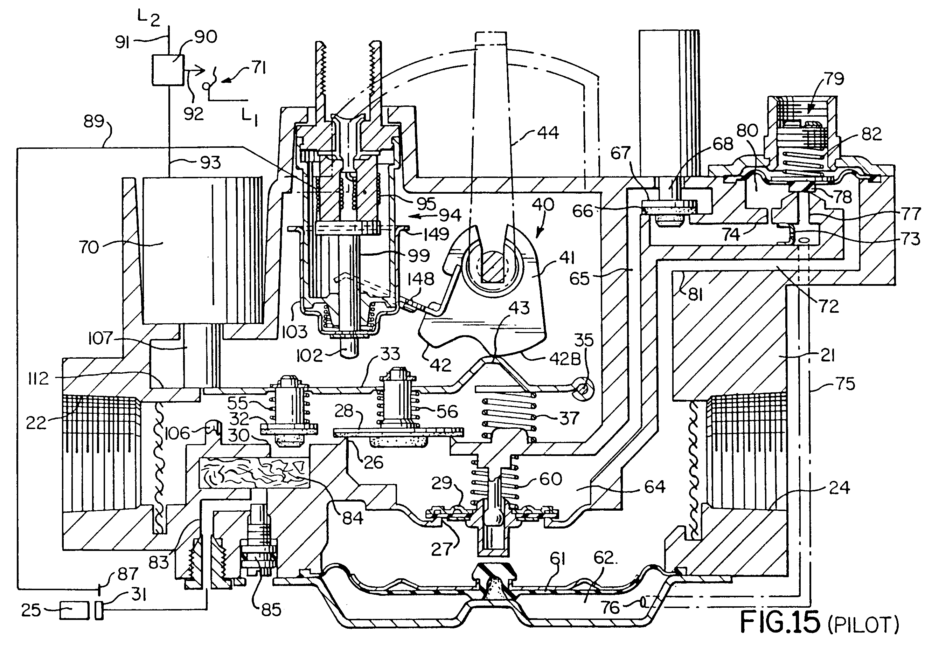

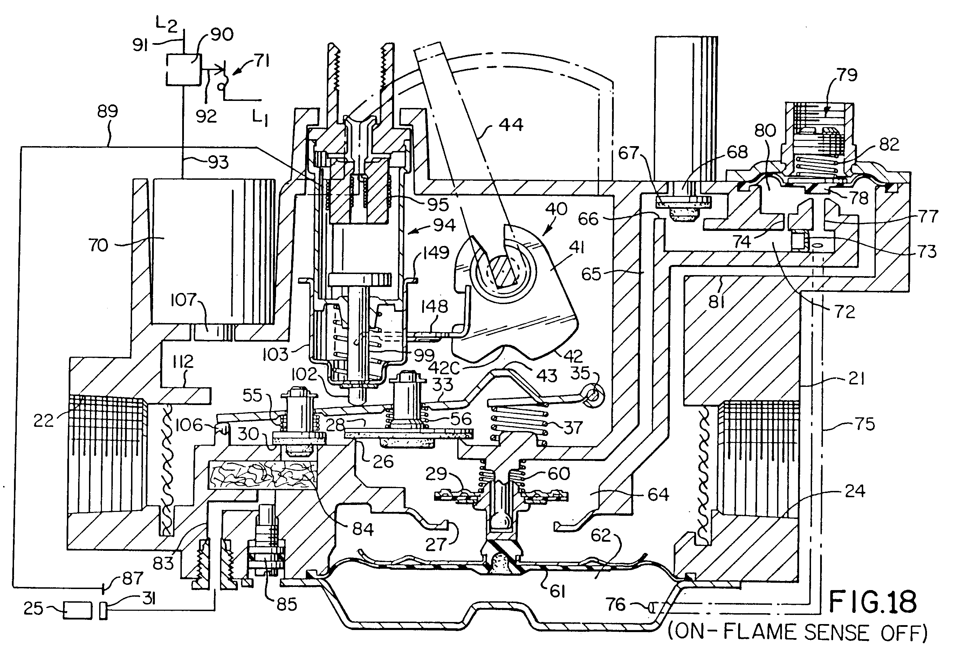

When the arm 44 is moved from the "set" position of FIG. 14, to the "pilot" position of FIG. 15, it can be seen that the yoke member 148 is moved away from the flange 149 of the flame-sense means 94, so that should the coil 95 not be operating to hold the plunger 99 in its locked position, the spring 104 will drive the plunger 99 downwardly to the position illustrated in FIG. 18 and thereby hold the lever 33 against the stop 106 so that the pilot valve member 32 and the first main valve member 28 are in their closed conditions against the respective valve seats 30 and 26 for a purpose hereinafter set forth.

The yoke member 148 is best illustrated in FIG. 8 and has a U-shaped part 150 that is provided with bent tang ends 151 which respectively are adapted to engage against the underside of the annular flange 149 of the sleeve 103 of the flame-sense means 94 as previously described. The yoke member 148 can be formed of any suitable metallic material, and the same has an L-shaped part 152, with the leg 153 thereof formed integrally with the U-shaped part 150, and with the other leg 154 thereof being bifurcated to define a slot 154' therein. The leg 154 normally has an arcuate section 156 that permits the leg 154 to be disposed in a slot 157 of the cam member 41 as illustrated in FIG. 9. Thereafter, the bowed portion 156 is flattened as illustrated in FIG. 10 to firmly lock the leg 154 to the cam member 41 so that the yoke member 148 moves in unison with the cam member 41 for the purpose previously described.

If desired, the arm 44 of the actuator means 40 can have a suitable push/pull handle 155 on the end 139 thereof to facilitate the movement of the arm 44 as previously described.

Should it be desired to provide the valve construction 21 with means for providing a soft ignition at the main burner means 25, such as by providing a low flow of fuel to the burner means 25 that is less than a full rated flow of fuel but is sufficient by itself to support combustion at the burner means 25 each time the thermostat 71 closes, the fuel control valve construction 20 can be provided with a bypass regulator means, which is generally indicated by the reference numeral 158 in FIG. 19, in the same manner as the fuel control valve construction set forth in the aforementioned US-A-4,549,571.

In particular, the pressure regulator means 158 includes a movable valve member 159 that is carried by a flexible diaphragm 160 and is normally urged to a valve member opening position by a compression spring 161, whereby the valve member 159 is disposed away from a valve seat 162 of the housing means 21. The valve seat 162 is interconnected to the passage 72 in advance of the restriction means 73 and 74 by a bypass passage 163. The valve seat 162 is adapted to interconnect the passage 163 with a chamber 164 defined by the diaphragm 160 and the housing means 21, the chamber 164 in turn being interconnected to the outlet 24 by a passage 165.

In addition to the bypass regulator 158 being provided in FIG. 19, the passage 75 that leads to the main diaphragm chamber 62 is provided with a delay means therein (not shown) that slows down the pressurization of the chamber and, thus, the opening of the main valve member 29 until after the bypass means 163 has provided a soft ignition at the main burner means 25, whereby the subsequent opening of the main valve member 29 provides a full rate of flow of fuel to the burner means 25 in the manner previously described and as fully set forth in US-A-4,549,571.

From the above, it can be seen that the control device 20 of this invention can be made from the various parts thereof in a simple manner by the method of this invention to operate in a manner now to be described.

As illustrated in FIG. 13, the actuator arm 44 is disposed in its "off" condition, wherein the part 42A of the cam surface 42 of the cam member 41 is acting on the cam follower portion 43 of the lever 33 and has moved the lever 33 in a counterclockwise direction in FIG. 13 in opposition to the force of the compression spring 37 so that the pilot valve member 32 and main valve member 28 are respectively held in closed conditions against their respective valve seats 30 and 26, so that no fuel from the inlet 22 can flow to the pilot burner means 31 or to the main burner means 25. In addition, it can be seen that the control device 20 in FIG. 13 is in a condition wherein the thermostat 71 is in a satisfied condition thereof so that the coil 70 is in a deenergized condition thereof and the plunger means 107 and 68 are respectively urged downwardly by their respective compression springs 110 and 69, so that the plunger 107 is against the stop 112 and the plunger 68 has its valve member 67 held against the valve seat 66. In addition, since no flame exists at the pilot burner means 31, the flame detector 87 maintains the coil 95 in its deenergized condition so that the compression spring 104 of the flame-sense means 94 holds the plunger 99 against the lever 33 to maintain the same against the stop 106 as illustrated.

When the operator desires to initially turn on the furnace utilizing the fuel control valve construction 20 of this invention by lighting the pilot burner 31, the operator must first move the actuator arm 44 to its "set," "reset" or "pilot light" position as illustrated in FIG. 14, wherein the cam member 41 now has the part 42B of the cam surface 42 thereof acting on the follower portion 43 of the lever 33, so that the lever 33 can pivot in a clockwise direction under the force of the compression spring 37 to the position illustrated in FIG. 14, wherein the end 36 of the lever 33 is disposed against the end surface 111 of the plunger means 107. In such a position of the lever 33, the pilot valve member 32 has been moved away from its valve seat 30, while the main valve member 28 is still maintained in contact with its valve seat 26. Of course, should the thermostat 71 be demanding heat at the time the arm 44 is moved to the "set" position as illustrated in FIG. 14, the cam surface 42B of the cam member 41 will maintain the lever 33 in the pivoted condition illustrated in FIG. 14, so that if the electrical circuit means 90 interconnects the power source leads L1 and L2 to the coil means 70, the upward movement of the plunger means 107 and 68 still will not affect the position of the lever 33 from remaining in the position illustrated in FIG. 14 until the arm 44 of the actuator means 40 of the valve construction 20 is moved out of its "pilot" position. However, the circuit means 90 may be constructed and arranged in such a way that the same will not interconnect the power source leads L1 and L2 to the coil means 70 even though the thermostat 71 is in its closed condition until the sense means 87 is detecting a flame at the pilot burner means 31.

It can be seen that when the arm 44 of the actuator means 40 is being moved from its "off" position to the "set" position of FIG. 14, the yoke member 148 has its tang ends 151 engage against the annular flange 149 of the sleeve 103 of the flame-sense means 94 and move the same upwardly from the position illustrated in FIG. 13 to the position illustrated in FIG. 14 in opposition to the force of the compression spring 104, so that the enlarged end 100 of the plunger 99 is placed in its locking position relative to the coil 95, with the yoke member 148 holding the plunger 99 in such locking position thereof as long as the arm 44 of the actuator means 40 is in its "set" position.

When the arm 44 of the actuator means 40 is in its "set" position, the gas now issuing from the pilot burner means 31 can be ignited by the operator utilizing a match or the like.

In any event, once the flame exists at the pilot burner means 31, the detector means 87 detects the presence of such flame and thereby causes a current to flow through the coil 95 of the flame-sense means 94 so that the flame-sense means 94, through an electromagnetic flux condition, maintains the plunger 99 in its locked position as illustrated in FIG. 14.

At this time, the operator can return the arm 44 to the "pilot" position, either manually or by the return spring 48', as illustrated in FIG. 15 where the tang 140 is against the stop 143. In this position, the cam part 42B of the cam surface 42 is still acting on the follower portion 43 of the lever 33, so that the pilot valve member 32 remains open. However, the yoke member 148 has now been removed away from the flange 149 of the flame-sense means 94 a sufficient distance so that if the flame at the pilot burner 31 ceases to exist, or did not exist in the first place through an unsuccessful pilot-lighting attempt, the plunger 99 will be driven downwardly by the spring 104 to pivot the lever 33 against the stop 106 and thereby close the pilot valve member 32 against its valve seat 30 to stop any further flow of fuel through the pilot burner 31.

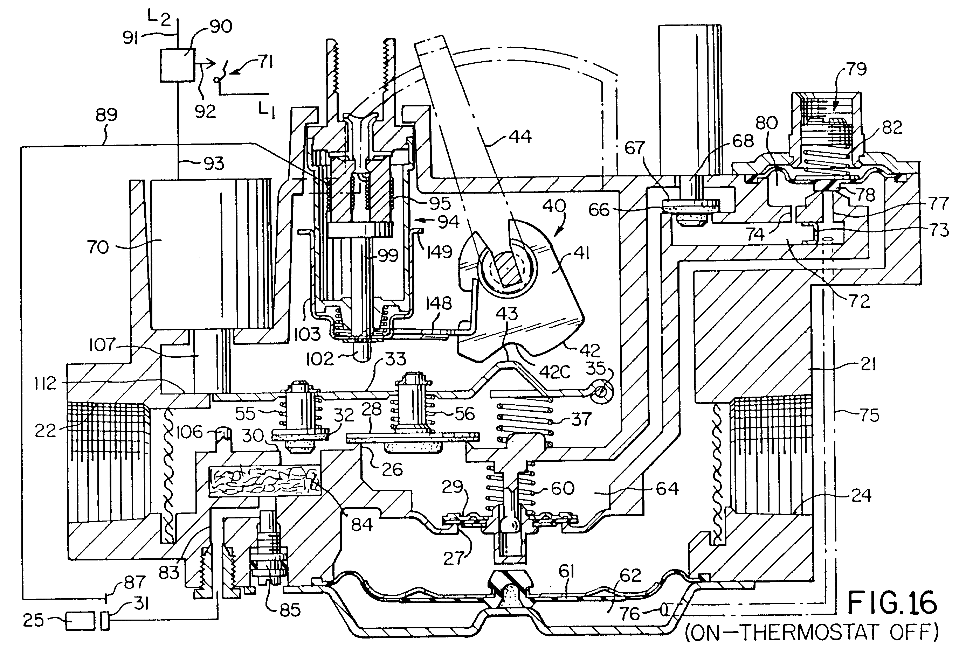

In the normal situation where the flame now exists at the pilot burner means 31, so that the flame-sense means 94 is locked in its up condition as illustrated in FIG. 15, the operator can move the arm 44 of the actuator means 40 to its "on" position, as illustrated in FIG. 16, where the cam surface 42C of the cam member 41 is now adjacent the follower means 43 of the lever 33, so that the compression spring 37 would tend to further rotate the lever 33 in a clockwise direction to position the cam follower 43 of the lever 33 against the cam surface 42C of the cam 41. However, if at this time the thermostat 71 is still in an open condition, it can be seen that the lever 33 cannot follow the permitted clockwise movement thereof from the position illustrated in FIG. 16 to place the cam follower means 43 into the cam surface 42C of the cam 41 because the end 36 of the lever 33 is still disposed against the end surface 111 of the plunger 107 that holds the lever 33 in the condition of maintaining the first main valve member 28 against its valve seat 26 to prevent any flow of fuel to the outlet 24.

However, when the thermostat 71 determines that the main burner means 25 should be operating in order to supply heat, the thermostat 71 is in the closed condition as illustrated in FIG. 17, whereby the same energizes the coil 70 which substantially simultaneously moves the plunger means 107 and 68 upwardly so as to permit the lever 33 to pivot in a clockwise direction and the valve member 67 to be moved away from the valve seat 66.

At this time, the lever 33 carries the main valve member 28 away from the valve seat 26 so that fuel can now flow to the space 64 intermediate the valve members 28 and 29 and can be passed through the passage 65, now open valve seat 66, and restrictor 73 into the passage 75 to the diaphragm chamber 62. As the pressure builds up in the diaphragm chamber 62, the pressure moves the diaphragm 61 upwardly and thereby carries the valve member 29 upwardly therewith in opposition to the force of the compression spring 60, so that the valve member 29 can now move to its open condition as illustrated in FIG. 17 and permit fuel to now flow from the inlet 22, through opened valve seats 26 and 27, to the outlet 24 and thereby issue from the main burner means 25 to be ignited by the pilot burner means 31. The pressure regulator 79 now functions in a manner to maintain the output pressure of the fuel being supplied to the burner means 25 at a substantially constant rate as determined by the setting of the pressure regulator 79 in the manner fully set forth in the aforementioned US-A-4,549,571. Thus, the fuel control valve construction 20 of this invention remains in the condition illustrated in FIG. 17 as long as the thermostat 71 remains in the closed condition and thereby demands heat from the main burner means 25.

However, when the thermostat 71 is now satisfied, the thermostat 71 opens and thereby disconnects electrical energy from the coil 70 so that the deenergized coil 70 permits the plunger means 107 and 68 to be moved downwardly by their respective compression springs 110 and 69. The downwardly moving plunger 107 carries the lever 33 therewith to the position illustrated in FIG. 15, so that the lever 33 closes the valve member 28 against the valve seat 26 to terminate the flow of fuel to the outlet means 24 and, thus, to the main burner means 25. In addition, the valve member 67 of the plunger means 68 is moved against its valve seat 66 to terminate the flow of fuel to the diaphragm chamber 62, which now exhausts to the outlet 24 in the manner previously described through the bleed valve seat 77 and then through the orifices 73 and 74, so that the exhausted chamber 62 permits the diaphragm 61 to be moved downwardly by the force of the compression spring 60 to thereby have the valve member 29 close against the valve seat 27.

At this time, the position of the lever 33 maintains the pilot valve member 32 in an open condition relative to its seat 30 so that the flame continues to exist at the pilot burner means 31.

Subsequently, should the thermostat 71 again close and thereby demand heat from the main burner means 25, the closing of the thermostat 71 energizes the coil 70 so that the plungers 107 and 68 are again moved upwardly from their down positions to the positions illustrated in FIG. 17 to cause the valve members 28 and 67 to open and, thus, the valve member 29 to subsequently open in the manner previously set forth to again supply fuel to the main burner means 25.

Thus, the fuel control valve construction 20 of this invention will cycle the main burner means 25 on and off under the control of the thermostat 71 as long as the arm 44 of the actuator means 40 remains in its "on" condition, and as long as a flame exists at the pilot burner means 31.

While the arm 44 of the actuator means 40 of the valve construction 20 is in the "on" condition thereof, and if for some reason the flame at the pilot burner means 31 should cease to exist, the detector 87 no longer will generate a current flow through the coil 95 of the flame-sense means 94 and the coil means 95 will thereby release the plunger 99, which under the force of the compression spring 104 will be driven downwardly in the manner illustrated in FIG. 18 to force the lever 33 against the stop 106 and thereby close the pilot valve member 32 against its valve seat 30 and the first main valve member 28 against its valve seat 26 to thereby terminate not only the flow of fuel to the main burner means 25, but also to the pilot burner means 31.

Thus, under the conditions illustrated in FIG. 18, and even though the thermostat 71 is demanding heat, it can be seen that no fuel will flow to the burner means 31 and 25, whereby in order to relight the pilot burner means 31, the arm 44 of the actuator means 40 must be returned to the "set" position so that the control valve means 20 can be operated in the manner previously set forth.

As previously stated, should it be desired to provide a soft ignition of the burner means 25 each time the second main valve member 29 is opened relative to its seat 27, the fuel control valve construction 20 can utilize the bypass pressure regulator means 158 of FIG. 19 in the same manner as set forth in the aforementioned US-A-4,549,571, whereby a further description of such soft ignition operation is not necessary.

From the above, it can be seen that the fuel control valve construction 20 of this invention operates in a simple and effective manner to control the operation of the burner means 31 and 25 as previously set forth.

Thus, it can be seen that this invention not only provides a new fuel control valve construction and method of making the same, but also this invention provides new parts for such a valve construction and methods of making such new parts.

## Claims

1. A fuel control valve construction (20) comprising a housing means (21) having an inlet means (22) that is adapted to be interconnected to fuel source (23) and a main outlet means (24) that is adapted to be interconnected to a main burner means (25), said housing means (21) having a main valve seat (26) for interconnecting said inlet means (22) with said main outlet means (24), a movable main valve member (28) for opening and closing said main valve seat (26), and a movable lever (33) operatively associated with said main valve member (28) and having a manually operable actuator means (40) for controlling the operating positions of said lever (33), said lever (33) having an intermediate cam follower portion (43) and opposed ends (34, 36) disposed on each side of said cam follower portion (43), with one end (34) of said opposed ends being pivotally mounted to said housing means (21) and with the other end (36) of said opposed ends serving for operating said main valve member (28), said housing means (21) having biasing means (37) operatively interconnected to said lever (33) to tend to pivot said lever (33) in one direction that opens said main valve member (28) away from its said main valve seat (26), said actuator means (40) having a cam means (41) operatively associated with said cam follower portion (43) of said lever (33) to tend to control the pivoted position of said lever (33) under the force of said biasing means (37), said actuator means (40) having an "off" position thereof that causes said cam means (41) to hold said lever (33) in an "off" pivoted position thereof that maintains said main valve member (28) in its closed condition against its closed condition against its said valve seat (26), said actuator means (40) having an "on" position thereof that causes said cam means (41) to tend to hold said lever (33) in an "on" pivoted position thereof that maintains said main valve member (28) in its open condition away from its said valve seat (26), and a thermostatically controlled means (70, 107) characterised in that the thermostatically controlled means (70, 107) is operatively associated with said lever (33) and is adapted to engage and hold said lever (33) in a position wherein said main valve member (28) is in a closed condition against its main valve seat (26) when said thermostatically controlled means (70, 107) is in one operating condition thereof and said actuator means (40) is in said "on" condition thereof.

2. A fuel control valve construction as set forth in claim 1, characterized in that said housing means (21) has a pilot outlet means (83) adapted to be interconnected to a pilot burner means (31) for said main burner means (25), said housing means (21) having a pilot valve seat (30) for interconnecting said inlet means (22) with said pilot outlet means (83), said housing means (21) having a movable pilot valve member (32) for opening and closing said pilot valve seat (30), said lever (33) being operatively associated with said pilot valve member (32).

3. A fuel control valve construction as set forth in claim 2, characterized in that biasing means (37) also tends to pivot said lever (33) in said one direction that opens said pilot valve member (32) away from its respective valve seat (30).

4. A fuel control valve construction as set forth in claim 3, characterized in that said actuator means (40) in said "off" position thereof also maintains said pilot valve member (32) in its closed condition against its respective valve seat (30).

5. A fuel control valve construction as set forth in claim 4, characterized in that said actuator means (40) has a "pilot" position thereof that causes said cam means (41) to tend to hold said lever (33) in a "pilot" pivoted position thereof that maintains said pilot valve member (32) in an open condition relative to its said pilot valve seat (30) and said main valve member (28) in a closed condition against its said main valve seat (26).

6. A fuel control valve construction as set forth in claim 5, characterized in that said actuator means (40) in said "on" position thereof also maintains said pilot valve member (32) in its open condition away from its respective valve seat (30).

7. A fuel control valve construction as set forth in claim 6, characterized in that said housing means (21) has a flame sense means (94) that is operatively associated with said lever (33) and is adapted to engage said lever (33) and move said lever (33) to said "off" position thereof when said actuator means (40) is in said "on" position thereof and said flame sense means (94) fails to sense the presence of a flame means at said pilot burner means (31).

8. A fuel control valve construction as set forth in claim 7, characterized in that said flame sense means (94) comprises a movable plunger (99) and a locking means (95) for holding said plunger (99) in a locked position thereof when said plunger (99) is moved to said locked position thereof and said locking means (95) is sensing the presence of a flame means at said pilot burner means (31), said flame sense means (94) having biasing means (104) operatively interconnected to said plunger (99) to tend to move said plunger (99) from said locked position thereof to an unlocked position thereof that causes said plunger (99) to hold said lever (33) in said "off" position thereof.

9. A fuel control valve construction as set forth in claim 8, characterized in that said actuator means (40) has moving means (148) operatively associated with said plunger (99) to move said plunger (99) from said unlocked position thereof to said locked position thereof when said actuator means (40) is moved from said "off" position thereof to a "set" position thereof.

10. A fuel control valve construction as set forth in claim 9, characterized in that said actuator means (40) is adapted to move said moving means (148) thereof away from said plunger (99) when said actuator means (40) is moved from said "pilot light" position thereof to said "set" position thereof.

11. A fuel control valve construction as set forth in claim 6, characterized in that said thermostatically controlled means (70, 107) is adapted to engage and hold said lever (33) in a position where said pilot valve member (32) is in an open condition away from its pilot valve seat (30) and said main valve member (28) is in a closed condition against its said main valve seat (26) when said thermostatically controlled means (70, 107) is in one operating condition thereof and said actuator means (40) is in said "on" condition thereof.

12. A fuel control valve construction as set forth in claim 1 or 11, characterized in that said thermostatically controlled means (70, 107) is adapted to permit said lever (33) to pivot to its "on" position when said thermostatically controlled means (70, 107) is in another operating condition thereof and said actuator means (40) is in said "on" position thereof.

13. A fuel control valve construction as set forth in claim 12, characterized in that said thermostatically controlled means (70, 107) comprises an electrical coil means (70) and a plunger means (107) operated by said coil means (70).

14. A fuel control valve construction as set forth in claim 13, characterized in that said housing means (21) has another plunger means (68) operated by said coil means (70) substantially in unison with the first-mentioned plunger means (107).

15. A fuel control valve construction as set forth in claim 14, characterized in that the first-mentioned plunger means (107) is engageable with said lever (33) and the other plunger means (68) carries a valve member (67).

16. A fuel control valve construction as set forth in claim 15, characterized in that said coil means (70) comprises a single coil (70), the first-mentioned plunger means (107) having a portion (108) thereof disposed in said coil (70) and the other plunger means (68) being entirely external to said coil (70) while being operated by said coil (70) substantially in unison with the first-mentioned plunger means (107).

17. A fuel control valve construction as set forth in claim 1, characterized in that said lever (33) is operatively associated with said main valve member (28) by having said other end (36) of said lever (33) carry said main valve member (28).

18. A fuel control valve construction as set forth in claim 2, characterized in that said lever (33) is operatively associated with said pilot valve member (32) by having said other end (36) of said lever (33) carry said pilot valve member (32).

## Patentansprüche

1. Ventilaufbau für Brennstoffregelung (20) mit einem Gehäuse (21), einem Gehäuseeinlaß (22) zum Anschluß einer Brennstoffquelle (23), einem Hauptauslaß (24) zum Anschluß eines Hauptbrenners (25), einem im Gehäuse (21) angeordneten Hauptventilsitz (26) zur Verbindung des Einlasses (22) mit dem Hauptauslaß (24), einem beweglichen Hauptventilkörper (28) zum Öffnen und Schließen des Hauptventilsitzes (26), einem mit dem Hauptventilkörper (28) in Wirkverbindung stehenden beweglichen Hebel (33) mit einer manuell bedienbaren Betätigungsvorrichtung (40) zur Einstellung der Arbeitsstellungen des Hebels (33), einer mittig am Hebel (33) angeordneten Nockenvorrichtung (43), neben der Nockenanordnung (43) angeordneten Endteilen (34,36), von denen der eine Endteil (34) schwenkbar am Ventilgehäuse (21) gelagert ist, während der andere Endteil (36) zur Betätigung des Hauptventilkörpers (28) dient, im Gehäuse (21) mit dem Hebel (33) in Wirkverbindung stehende Vorspannvorrichtungen (37), die den Hebel (33) in solcher Richtung beaufschlagen, daß der Hebel (33) den Hauptventilkörper (28) öffnet und vom Hauptventilsitz (26) abhebt, eine zur Betätigungsvorrichtung (40) gehörige Betätigungsnocke (41), welche mit dem Nockenfühlerteil (43) des Hebels (33) in Wirkverbindung steht, um entgegen der Kraft der Vorspannvorrichtungen (37) die Schwenklage des Hebels (33) einzustellen, wobei die Betätigungsvorrichtung (40) eine "Aus"-Stellung hat, in der die Nockenanordnung (41) den Hebel (33) in einer der "Aus"-Stellung entsprechenden Kipplage hält, in der der Hauptventilkörper (28) in der Schließlage am Ventilsitz (26) gehalten wird, und wobei ferner die Betätigungsvorrichtung (40) eine "Ein"-Stellung aufweist, in der ihre Nockenanordnung (41) den Hebel (33) in einer der "Ein"-Stellung entsprechenden Kipplage hält, in der der Hauptventilkörper (28) öffnet und vom Ventilsitz (26) entfernt bleibt, und auch eine Thermostatensteuerung (70,107) vorgesehen ist, dadurch gekennzeichnet, daß die Thermostatensteuerung (70,107) mit dem Hebel (33) in Wirkverbindung steht, um den Hebel (33) in einer Stellung zu halten, in welcher der Hauptventilkörper (28) im Schließzustand an seinem Hauptventilsitz gehalten wird, sofern sich die Thermostatensteuerung (70,107) in einem Arbeitszustand und die Betätigungsvorrichtung (40) im erwähnten "Ein" -Zustand befindet.

2. Ventilaufbau nach Anspruch 1, dadurch gekennzeichnet, daß im Gehäuse (21) ein Pilotauslaß (83) vorgesehen ist, welcher mit einem Pilotbrenner (31) des Hauptbrenners (25) verbunden werden kann, daß im Gehäuse (21) ein Pilotventilsitz (30) vorgesehen ist, über den der Einlaß (22) mit dem Pilotauslaß (83) verbunden werden kann, daß ferner im Gehäuse (21) ein beweglicher Pilotventilkörper (32) vorgesehen ist, der dem Öffnen und Schließen des Pilotventilsitzes (30) dient, und daß der Hebel (33) mit dem Pilotventilkörper (32) in Wirkverbindung steht.

3. Ventilaufbau nach Anspruch 2, dadurch gekennzeichnet, daß die Vorspannvorrichtung (37) auch auf die Kippung des Hebels (33) in solcher Richtung einwirkt, daß der Pilotventilkörper (32) von seinem Ventilsitz (30) abgehoben wird.

4. Ventilaufbau nach Anspruch 3, dadurch gekennzeichnet, daß die Betätigungsvorrichtung (40) in der erwähnten "Aus"-Stellung auch den Pilotventilkörper (32) in Schließlage am zugehörigen Ventilsitz (30) hält.

5. Ventilaufbau nach Anspruch 4, dadurch gekennzeichnet, daß die Betätigungsvorrichtung (40) eine "Pilot"-Stellung aufweist, in der die Nockenanordnung (41) den Hebel (33) in einer der "Pilot"-Stellung entsprechenden Schwenklage hält, in der der Pilotventilkörper (32) bezüglich seines Pilotventilsitzes (30) in Offenstellung gehalten wird, während der Hauptventilkörper (28) in Schließstellung an seinem Hauptventilsitz (26) in Anlage gehalten wird.

6. Ventilaufbau nach Anspruch 5, dadurch gekennzeichnet, daß die Betätigungsvorrichtung (40) in der erwähnten "Ein"-Stellung auch den Pilotventilkörper (32) in seiner vom Ventilsitz (30) abgehobenen Offenstellung hält.

7. Ventilaufbau nach Anspruch 6, dadurch gekennzeichnet, daß im Gehäuse (21) eine mit dem Hebel (33) in Wirkverbindung stehende Flammenfühleranordnung (94) vorgesehen ist, die den Hebel (33) in die "Aus"-Stellung bringt, wenn die Betätigungsvorrichtung (40) in der "Ein"-Stellung steht und die Flammenfühleranordnung (94) keine Flamme am Pilotbrenner (31) feststellen kann.

8. Ventilaufbau nach Anspruch 7, dadurch gekennzeichnet, daß die Flammenfühleranordnung (94) einen beweglichen Kolben (99) und eine Verriegelung (95) aufweist, die den Kolben (99) in verriegelter Stellung festhält, wenn der Kolben (99) in die verriegelte Stellung bewegt wurde und die Verriegelung (95) eine Flamme am Pilotbrenner (31) erfaßte, und daß die Flammenfühleranordnung (94) in Wirkverbindung mit dem Kolben (99) stehende Vorspannvorrichtungen (104) aufweist, die bestrebt sind, den Kolben (90) aus der verriegelten Stellung heraus in eine entriegelte Stellung zu bringen, in welcher der Kolben (99) den Hebel (33) in der "Aus"-Stellung hält.

9. Ventilaufbau nach Anspruch 8, dadurch gekennzeichnet, daß die Betätigungsvorrichtung (40) mit dem Kolben (99) in Wirkverbindung stehende Verstellmittel (148) aufweist, mit denen der Kolben (99) von der entriegelten Stellung in die verriegelte Stellung bewegt wird, wenn man die Betätigungsvorrichtung (40) von der "Aus"-Stellung in eine "Ein"-Stellung bewegt.

10. Ventilaufbau nach Anspruch 9, dadurch gekennzeichnet, daß die Betätigungsvorrichtung (40) so ausgebildet ist, daß sie die Verstellvorrichtung (148) vom Kolben (99) fortbewegen kann, wenn man die Betätigungsvorrichtung (40) von der "Pilotzündung"-Stellung in die "Ein"-Stellung bewegt.

11. Ventilaufbau nach Anspruch 6, dadurch gekennzeichnet, daß die Thermostatensteuerung (70, 107) die Aufgabe hat, den Hebel (33) in einer Stellung zu halten, in der der Pilotventilkörper (32) öffnet und von seinem Pilotventilsitz (30) abgehoben ist, und der Hauptventilkörper (28) im Schließzustand an seinem Hauptventilsitz (26) gehalten wird, sofern sich die Thermostatensteuerung (70, 107) in dem einen Zustand und die Betätigungsvorrichtung (40) im erwähnten "Ein"-Zustand befindet.

12. Ventilaufbau nach Anspruch 1 oder 11, dadurch gekennzeichnet, daß die Thermostatensteuerung (70, 107) die Möglichkeit hat, den Hebel (33) in die "Ein"-Stellung zu verkippen, wenn die Thermostatensteuerung (70, 107) in der anderen Arbeitsstellung steht und die Betätigungsvorrichtung (40) sich in der "Ein"-Stellung befindet.

13. Ventilaufbau nach Anspruch 12, dadurch gekennzeichnet, daß die Thermostatensteuerung (70, 107) eine elektromagnetische Spule (70) und einen von der Spule (70) betätigten Kolben (107) enthält.

14. Ventilaufbau nach Anspruch 13, dadurch gekennzeichnet, daß im Gehäuse (21) ein weiterer von der Spule (70) betätigter Kolben (68) vorhanden ist, der im wesentlichen gemeinsam mit dem ersterwähnten Kolben (107) verstellt wird.

15. Ventilaufbau nach Anspruch 14, dadurch gekennzeichnet, daß der ersterwähnte Kolben (107) vom Hebel (33) beaufschlagbar ist und daß der andere Kolben (68) einen Ventilkörper (67) trägt.

16. Ventilaufbau nach Anspruch 15, dadurch gekennzeichnet, daß die Spule (70) eine einzige Wicklung (70) enthält, daß der ersterwähnte Kolben (107) mit einem Teil (108) innerhalb der Spule (70) liegt und daß der andere Kolben (68) sich völlig außerhalb der Spule (70) befindet, aber doch von der Spule im wesentlichen zugleich mit dem ersterwähnten Kolben (107) betätigt wird.

17. Ventilaufbau nach Anspruch 1, dadurch gekennzeichnet, daß der Hebel (33) dadurch mit dem Hauptventilkörper (28) in Wirkverbindung steht, daß das erwähnte andere Ende (36) des Hebels (33) den Hauptventilkörper (28) trägt.

18. Ventilaufbau nach Anspruch 2, dadurch gekennzeichnet, daß der Hebel (33) dadurch mit dem Pilotventilkör-per (32) in Wirkverbindung steht, daß das erwähnte andere Ende (36) des Hebels (33) den Pilotventilkörper (32) trägt.

## Revendications

1. Une structure (20) de vanne de réglage de combustible comprenant un moyen de boîtier (21) pourvu d'un moyen d'entrée (22) qui est apte à être relié à une source de combustible (23) et un moyen de sortie principale (24) qui est apte à être réglé à un moyen de brûleur principal (25), ledit moyen de boîtier (21) comprenant un siège (26) de vanne principale pour relier ledit moyen d'entrée (22) audit moyen de sortie principale (24), un élément mobile de vanne principale (28) pour ouvrir et fermer ledit siège (26) de vanne principale, et un levier mobile (33) associé en actionnement audit élément de vanne principale (28) et pourvu d'un moyen actionneur (40) à mettre en oeuvre manuellement pour régler les positions de fonctionnement dudit levier (33), ledit levier (33) comportant une partie intermédiaire (43) de contrecame et des extrémités opposées (34, 36), disposées sur chaque côté de ladite partie (43) de contre-came, une première extrémité (34) parmi lesdites extrémités opposées étant montée à pivotement sur ledit moyen de boîtier (21) et l'autre extrémité (36) parmi lesdites extrémités opposées servant à mettre en oeuvre ledit élément de vanne principale (28), ledit moyen de boîtier (21) comprenant un moyen de sollicitation (37) relié en fonctionnement audit levier (33) de manière à tendre à faire pivoter ledit levier (33) dans une première direction qui ouvre ledit élément de vanne principale (28) à l'écart de son dit siège (26) de vanne principale, ledit moyen actionneur (40) comprenant un moyen de came (41) associé en fonctionnement à ladite partie (43) de contre-came dudit levier (33) de manière à tendre à régler la position pivotée dudit levier (33) sous la force dudit moyen de sollicitation (37), ledit moyen actionneur (40) comportant une position "hors fonction", qui amène ledit moyen de came (41) à tenir ledit levier (33) dans une position "hors fonction" pivotée, de celui-ci, qui maintient ledit élément de vanne principale (28) dans sa condition fermée contre son dit siège (26) de vanne, ledit moyen actionneur (40) comportant une position "en fonction" qui amène ledit moyen de came (41) à tendre à tenir ledit levier (33) dans une position pivotée "en fonction" , de celui-ci, qui maintient ledit élément de vanne principale (28) dans sa condition ouverte à l'écart de son dit siège (26) de vanne, et un moyen à réglage thermostatique (70, 107), caractérisée en ce que le moyen à réglage thermostatique (70, 107) est associé en fonctionnement audit levier (33) et est apte à venir en prise avec ledit levier (33) et à le maintenir dans une position dans laquelle ledit élément de vanne principale (28) est dans une position fermée contre son siège (26) de vanne principale lorsque ledit moyen à réglage thermostatique (70, 107) est dans une condition de fonctionnement de celui-ci et que ledit moyen actionneur (40) est dans ladite condition "en fonction" de celui-ci.

2. Une structure de vanne de réglage de combustible selon la revendication 1, caractérisée en ce que ledit moyen de boîtier (21) comprend un moyen de sortie (83) de pilote apte à être relié à un moyen de brûleur pilote (31) destiné audit moyen de brûleur principal (25), ledit moyen de boîtier (21) comprenant un siège (30) de vanne pilote pour relier ledit moyen d'entrée (22) audit moyen de sortie (83) de pilote, ledit moyen de boîtier (21) comprenant un élément de vanne (32) de pilote mobile pour ouvrir et fermer ledit siège (30) de vanne de pilote, ledit levier (33) étant associé en fonctionnement audit élément de vanne (32) de pilote.

3. Une structure de vanne de réglage de combustible selon la revendication 2, caractérisée en ce qu'un moyen de sollicitation (37) tend aussi à faire pivoter ledit levier (33) dans ladite première direction qui ouvre ledit élément de vanne (32) de pilote à l'écart de son siège respectif (30) de vanne.

4. Une structure de vanne de réglage de combustible selon la revendication 3, caractérisée en ce que ledit moyen actionneur (40) maintient, dans ladite disposition "hors fonction", ledit élément de vanne (32) de pilote dans sa condition fermée contre son siège respectif (30) de vanne.

5. Une structure de vanne de réglage de combustible selon la revendication 4, caractérisée en ce que ledit moyen actionneur (40) possède une position "pilote" qui amène ledit moyen de came (41) à tendre à tenir ledit levier (33) dans une position "pilote" pivotée qui maintient ledit élément de vanne (32) de pilote dans une condition ouverte par rapport audit siège (30) de vanne de pilote et ledit élément (28) de vanne principal dans une condition fermée contre son dit siège (26) de vanne principale.

6. Une structure de vanne de réglage de combustible selon la revendication 5, caractérisée en ce que ledit moyen actionneur (40) maintient, dans sa position "en fonction", ledit élément de vanne (32) de pilote dans sa condition ouverte à l'écart de son siège respectif (30) de vanne.

7. Une structure de vanne de réglage de combustible selon la revendication 6, caractérisée en ce que ledit moyen de boîtier (21) comporte un moyen détecteur (94) de flamme qui est associé en fonctionnement audit levier (33) et est apte à venir en prise avec ledit levier (33) et à déplacer ledit levier (33) vers sa dite position "hors fonction" lorsque ledit moyen actionneur (40) est dans sa dite position "en fonction" et que ledit moyen détecteur (94) de flamme ne détecte pas la présence d'un moyen de flamme audit moyen de brûleur pilote (31).

8. Une structure de vanne de réglage de combustible selon la revendication 7, caractérisée en ce que ledit moyen détecteur (94) de flamme comprend un plongeur mobile (99) et un moyen de verrouillage (95) pour tenir ledit plongeur (99) dans une position verrouillée de celui-ci, lorsque ledit plongeur (99) est déplacé vers sa dite position verrouillée et que ledit moyen de verrouillage (95) détecte la présence d'un moyen de flamme audit moyen de brûleur pilote (31), ledit moyen détecteur (94) de flamme comprenant un moyen de sollicitation (104) relié en fonctionnement audit plongeur (99) de manière à de tendre à déplacer ledit plongeur (99) depuis sa dite position verrouillée vers une position déverrouillée de celui-ci, qui amène ledit plongeur (99) à tenir ledit levier (33) dans sa dite position "hors fonction".

9. Une structure de vanne de réglage de combustible selon la revendication 8, caractérisée en ce que ledit moyen actionneur (40) comprend un moyen de déplacement (148) associé en fonctionnement audit plongeur (99) de manière à déplacer ledit plongeur (99) depuis sa dite position déverrouillée vers sa dite position verrouillée lorsque ledit moyen actionneur (40) est déplacé de sa position en "fonction" vers une position "de préparation" de celui-ci.

10. Une structure de vanne de réglage de combustible selon la revendication 9, caractérisée en ce que ledit moyen actionneur (40) est apte à déplacer son dit moyen de déplacement (148) à l'écart dudit plongeur (99) lorsque ledit moyen actionneur (40) est déplacé depuis sa dite position "d'allumage du pilote" vers sa dite position "de préparation".

11. Une structure de vanne de réglage de combustible selon la revendication 6, caractérisée en ce que le moyen à réglage thermostatique (70, 107) est apte à venir en prise avec ledit levier (33) et à le maintenir dans une position dans laquelle ledit élément de vanne (32) de pilote est dans une position ouverte écartée de son siège (30) de vanne de pilote et le dit élément de vanne principale (28) est dans une position fermée contre son dit siège (26) de vanne principale lorsque ledit moyen à réglage thermostatique (70, 107) est dans une première condition de fonctionnement de celui-ci et que ledit moyen actionneur (40) est dans sa dite position "en fonction".

12. Une structure de vanne de réglage de combustible selon la revendication 1 ou 11, caractérisée en ce que ledit moyen à réglage thermostatique (70, 107) est apte à permette audit levier (33) de pivoter vers sa position "en fonction" lorsque ledit moyen à réglage thermostatique (70, 107) est dans une autre condition de fonctionnement de celui-ci et que ledit moyen actionneur (40) est dans sa dite position "en fonction".

13. Une structure de vanne de réglage de combustible selon la revendication 12, caractérisée en ce que ledit moyen à réglage thermostatique (70, 107) comprend un moyen de bobine électrique (70) et un moyen plongeur (107) mis en oeuvre par ledit moyen de bobine (70).

14. Une structure de vanne de réglage de combustible selon la revendication 13, caractérisée en ce que ledit moyen de boîtier (21) comprend un autre moyen plongeur (68) mis en oeuvre par ledit moyen de bobine (70) de façon sensiblement concordante avec le moyen plongeur mentionné en premier (107).

15. Une structure de vanne de réglage de combustible selon la revendication 14, caractérisée en ce que le moyen plongeur mentionné en premier (107) peut être mis en prise avec ledit levier (33) et l'autre moyen plongeur (68) porte un élément de vanne (67).

16. Une structure de vanne de réglage de combustible selon la revendication 15, caractérisée en ce que ledit moyen de bobine (70) comprend une bobine unique (70), une partie du moyen plongeur mentionné en premier (107) ayant une portion (108) disposée dans ladite bobine (70) et l'autre moyen plongeur (68) étant entièrement extérieur à ladite bobine (70) tout en étant mis en oeuvre par ladite bobine (70) sensiblement en concordance avec le moyen plongeur mentionné en premier (107).

17. Une structure de vanne de réglage de combustible selon la revendication 1, caractérisée en ce que ledit moyen de levier (33) est associé en fonctionnement audit élément de vanne principale (28) du fait que ladite autre extrémité (36) dudit levier (33) porte ledit élément de vanne principale (28).

18. Une structure de vanne de réglage de combustible selon la revendication 2, caractérisée en ce que ledit levier (33) est associé en fonctionnement audit élément de vanne (32) de pilote du fait que ladite autre extrémité (36) dudit levier (33) porte ledit élément de vanne (32) de pilote.
